# EUROPEAN PATENT APPLICATION

(11) **EP 4 811 522 A1**
(43) Date of publication of application: **23.09.2026**
(21) Application number: 25774769.1
(22) Date of filing: 18.03.2025
(51) Int. Cl.: H01M 50/282, H01M 50/278, H01M 50/342, H01M 50/383, H01M 50/204, H01M 50/289

(54) **BATTERY ASSEMBLY AND BATTERY PACK COMPRISING SAME**

(30) Priority: 20.03.2024 KR 20240038300; 14.03.2025 KR 20250033136
(71) Applicant: LG Energy Solution, Ltd., Seoul 07335 (KR)
(72) Inventor: SHIN, Jonghong, Daejeon 34122 (KR); PARK, Won Kyoung, Daejeon 34122 (KR); KIM, Younggil, Daejeon 34122 (KR)
(74) Representative: BCKIP Part mbB
(86) International application number: PCT/KR2025/003480
(87) International publication number: WO 2025/198296

(57) **Abstract**

A battery assembly according to one specific embodiment of the present disclosure comprises: a battery cell stack in which a plurality of battery cells including electrode leads are stacked; a frame in which the battery cell stack is housed and the upper surface is open; and a top cover assembly that covers the open upper surface of the frame, wherein the top cover assembly includes a top cover comprising partition walls.

## Description

### [TECHNICAL FIELD]

### Cross-Reference to Related Application(s)

This application claims priority to and the benefit of Korean Patent Application No. KR10-2024-0038300, filed on March 20, 2024, and Korean Patent Application No. KR10-2025-0033136, filed on March 14, 2025, with the Korean Intellectual Property Office, the entire contents of which are incorporated herein by reference.

The present disclosure relates to a battery assembly and a battery pack including the same, and more particularly, to a battery assembly having improved safety and fire resistance during ignition of a battery cell in the battery assembly, and a battery pack including the same.

### [BACKGROUND ART]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low selfdischarge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator interposed between them, and an exterior material or a battery case which hermetically seal and houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminated paper.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed or thermal runaway phenomenon occurs in a battery cell, the possibility of explosion or ignition increases.

If the emission of gas, flame or the like is not properly controlled, there is a risk that gas, flame or the like may be emitted toward other battery modules, which may cause a thermal chain reaction in other battery modules. In particular, a module terminal (e.g., a busbar) for electrically connecting with other battery modules or battery packs may be present on the front side of the battery module, however, if gas, flame or the like is emitted toward the front side of the battery module, it may damage the battery module terminal in the battery pack to cause an electrical short circuit. In addition, other battery modules may be present on the front side of the battery module, however, if gas, flame or the like is emitted toward the front side of the battery module, the emitted gas, flame or the like may be directed toward other battery modules, which may cause a chain explosion or ignition between battery modules.

If a thermal propagation between battery modules or battery cells is not controlled, a rapid voltage drop in the battery module or battery pack may occur, which may lead to a sudden interruption of a device mounted with the battery module or battery pack, which may cause unexpected damage. For example, if a voltage drop occurs in a battery pack while driving an electric vehicle, there is a possibility that unexpected casualties may occur to electric vehicle users due to the interruption of the device's operation.

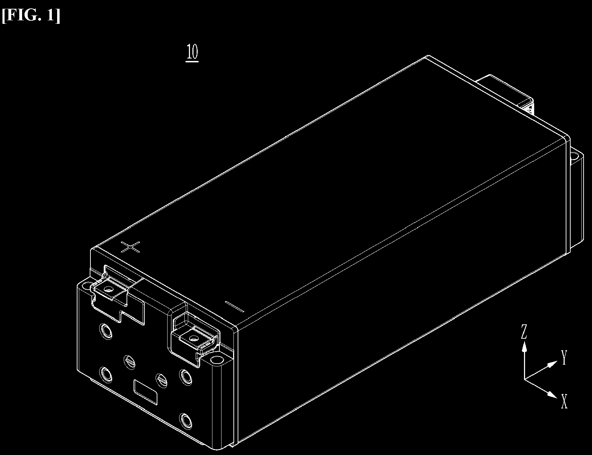

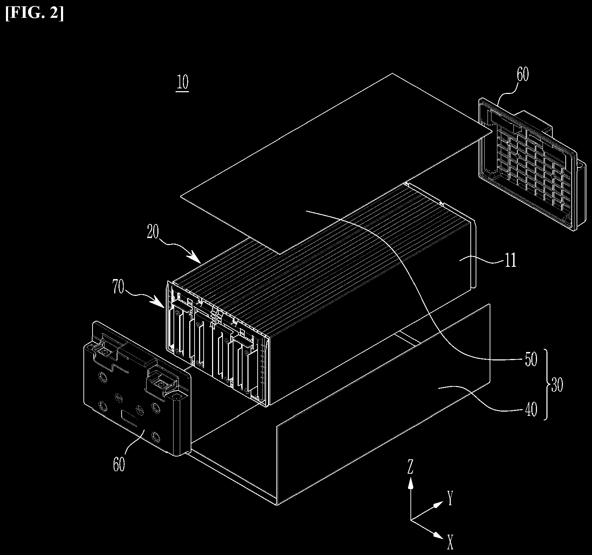

FIG. 1 is a perspective view showing a conventional battery module. FIG. 2 is an exploded perspective view showing a conventional battery module.

Referring to FIGS. 1 and 2, a conventional battery module 10 is configured such that a plurality of battery cells 11 are stacked to form a battery cell stack 20, and the battery cell stack 20 is housed in a frame 30. The battery module may include a frame 30 that houses the battery cell stack 20, and end plates 60 that cover the front and rear surfaces of the battery cell stack 20. As an example, the conventional frame 30 may include a lower frame 40 that covers both side surfaces and a lower surface of the battery cell stack 20, and an upper cover 50 that covers an upper surface of the battery cell stack 20. In addition, the conventional battery assembly 10 may further include a busbar frame 70 located between the end plate 60 and the battery cell stack 20.

The flame or gas generated during ignition of a specific battery cell 11 may be transferred to other adjacent battery cells 11 in the battery module 10. In this case, while the flame propagates to other adjacent battery cells 11, damage may occur to other adjacent battery cells 11, and other adjacent battery cells 11 may also ignite. This may cause an explosion of the battery module 10, and the flame or gas may propagate to the outside of the battery module 10 to cause greater damage. That is, it is important to prevent the flame or gas generated during ignition of a battery cell 11 from being transferred to other adjacent battery cells 11 in the battery module 10.

### [DETAILED DESCRIPTION OF THE INVENTION]

### [Technical Problem]

It is an object of the present disclosure to provide a battery assembly having improved safety and fire resistance during ignition of a battery cell in the battery assembly. Specifically, it is an object of the present disclosure to provide a battery assembly that can protect other adjacent battery cells in the battery assembly from flame or gas when a battery cell ignites, and can quickly ignite the flame or gas, and a battery pack including the same.

However, the technical objects to be solved by embodiments of the present disclosure are not limited to the above-described objects, and can be variously expanded within the scope of the technical idea included in the present disclosure.

### [Technical Solution]

According to certain aspects of the present disclosure, there is provided a battery assembly comprising: a battery cell stack in which a plurality of battery cells including electrode leads are stacked; a frame in which the battery cell stack is housed and the upper surface is open; and a top cover assembly that covers the open upper surface of the frame, wherein the top cover assembly includes a top cover comprising partition walls.

The top cover may include one or more laminate layers and silicone layers having flexibility.

The laminate layer may have a thickness of 0.1 mm or more and 0.2 mm or less.

The laminate layer may have a thickness of 0.5 mm or more and 1.0 mm or less.

The laminate layer may be attached to an upper part or a lower part of the silicone layer.

The top cover may further include a film layer including a flame retardant material.

The laminate layer may have a cut-opened part that is cut-opened to have a shape opened upward or downward.

The top cover assembly may include a top plate located at a lower end of the top cover.

The top plate may include one or more venting holes for discharging gas in the frame.

The top cover may include a rupture part that is located to correspond to the venting hole and is structured to be ruptured at a predetermined pressure or higher.

An opening part may be formed in an area excluding a connecting part among the circumferential edge of the rupture part, and the rupture part may have a form that is connected to the top cover by the connecting part.

According to certain other aspects of the present disclosure, there is provided a battery pack comprising: the above-mentioned battery assembly; a pack frame in which the battery assembly is housed and the upper part is open; and a pack cover that covers the open upper part of the pack frame, wherein a space partitioned by the partition wall between the pack cover and the top cover becomes a venting flow path.

The partition walls may be spaced apart from the pack cover by a gap.

The partition walls may be abutted on the lower end of the pack cover.

A partition wall plate is disposed at least at one place between the battery cells, in the battery cell stack, one or more battery cells are partitioned on the basis of the partition wall plate to form a battery cell unit, and the battery cell unit and the venting flow path may correspond on one-to-one basis.

### [Advantageous Effects]

According to certain embodiments of the present disclosure, the top cover of the battery assembly is provided with a partition wall, thereby preventing flames or gases generated in the battery cells from being transferred to other adjacent battery cells in the battery assembly. Thereby, other adjacent battery cells in the battery assembly can be protected from flames or gases when the battery cell ignites.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a conventional battery module.
FIG. 2 is an exploded perspective view showing a conventional battery module
FIG. 3 is a perspective view showing a battery assembly according to one specific embodiment of the present disclosure.
FIG. 4 is a plan view showing a battery assembly according to one specific embodiment of the present disclosure.
FIG. 5 is an exploded perspective view showing a battery assembly according to one specific embodiment of the present disclosure.
FIG. 6 is an exploded perspective view showing a top cover assembly according to one specific embodiment of the present disclosure.
FIG. 7 is a cross-sectional view showing a cross section of a top cover according to one specific embodiment of the present disclosure.
FIG. 8 is a cross-sectional view showing a cross section of a top cover taken along the cutting line A-A' of FIG. 4.
FIG. 9 is a perspective view showing a top plate according to one specific embodiment of the present disclosure.
FIG. 10 is a perspective view showing a top cover and a top plate according to one specific embodiment of the present disclosure.
FIG. 11 is a cross-sectional view of a battery assembly according to another embodiment of the present disclosure.
FIG. 12 is a perspective view of a battery pack according to one specific embodiment of the present disclosure.
FIG. 13 is an exploded perspective view of a battery pack according to one specific embodiment of the present disclosure.
FIG. 14 is a plan view of a battery pack according to one specific embodiment of the present disclosure.
FIG. 15 is a partial perspective view showing a battery assembly housed in a battery pack according to one specific embodiment of the present disclosure.
FIG. 16 is a cross-sectional view showing a cross-section taken along the cutting line B-B' of FIG. 14.
FIG. 17 is a cross-sectional view of a battery assembly and a battery pack according to yet another embodiment of the present disclosure.
FIG. 18 is a cross-sectional view of a battery assembly and a battery pack according to yet another embodiment of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

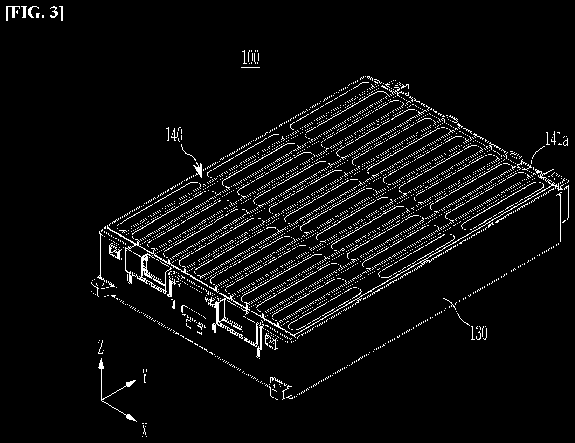

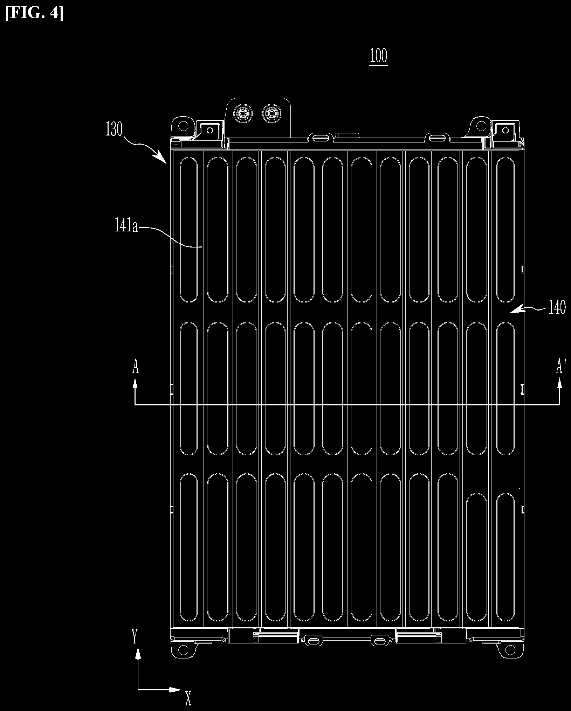

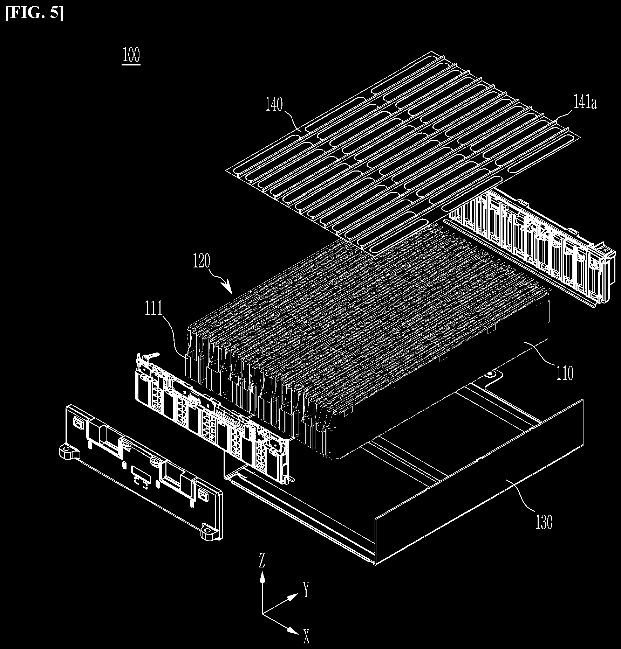

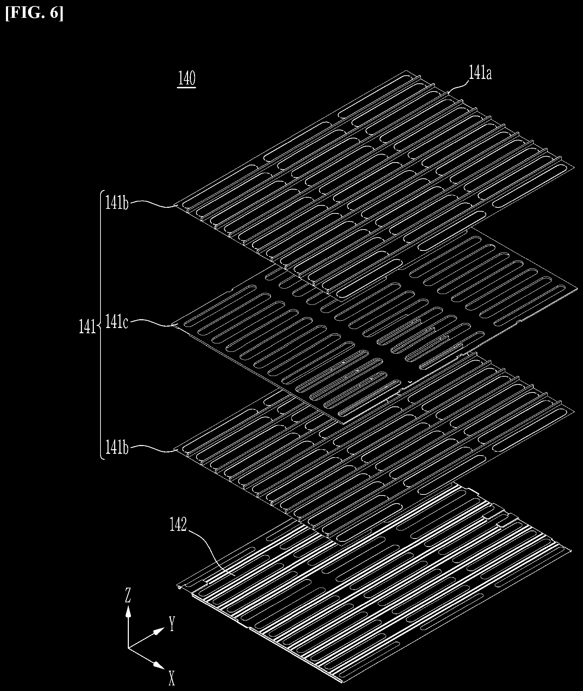

FIG. 3 is a perspective view showing a battery assembly 100 according to one specific embodiment of the present disclosure. FIG. 4 is a plan view showing a battery assembly 100 according to one specific embodiment of the present disclosure. FIG. 5 is an exploded perspective view showing a battery assembly 100 according to one specific embodiment of the present disclosure. FIG. 6 is an exploded perspective view showing a top cover assembly 140 according to one specific embodiment of the present disclosure.

Referring to FIGS. 3 to 6, a battery assembly 100 according to one specific embodiment of the present disclosure includes a battery cell stack 120 in which a plurality of battery cells 110 including electrode leads 111 are stacked, a frame 130 in which the battery cell stack 120 is housed and the upper surface is open, and a top cover assembly 140 that covers the open upper surface of the frame 130. The top cover assembly 140 includes a top cover 141 comprising partition walls 141a. The direction in which the electrode leads 111 protrude from the battery cells 110 may be a direction parallel to the Y-axis.

The flame or gas generated when the battery cell 110 ignites may not be transferred to other adjacent battery cells 110 in the battery assembly 100 by the partition wall 141a. That is, it is possible to block movement of the flame or gas to other adjacent battery cells 110 in the battery assembly 100 by the partition wall 141a. More specifically, the flame or gas generated during ignition of the battery cell 110 moves to the venting flow path, which is a space partitioned by the partition wall 141a described below. The flame or gas flowing into one of the venting flow paths is blocked from moving to other venting flow paths by the partition wall 141a. Therefore, it is possible to prevent flame or gas generated in one battery cell 110 from causing ignition of other battery cells 110 while moving to the other battery cells 110, ultimately minimizing thermal propagation between battery cells. This makes it possible to protect other adjacent battery cells 110 in the battery assembly 100 from flame or gas during ignition of a battery cell 110.

The top cover 141 may include one or more laminate layers 141b and silicone layers 141c having flexibility.

Since one or more laminate layers 141b and silicone layers 141c constituting the top cover 141 have flexibility, a worker can easily manufacture the partition wall 141a of the top cover 141 by bending or folding the top cover 141. In addition, the top cover 141 according to one specific embodiment of the present disclosure is composed of a laminate layer and a silicone, which are relatively inexpensive compared to steel and aluminum, and therefore can achieve a cost reduction effect.

The silicone layer 141c is included in the top cover 141, which makes it possible to block thermal transfer from the ignited battery cell 110 to the upper end part of the battery assembly 100 (+Z-axis direction of FIG. 3).

The laminate layer 141b may be a double-sided laminate material (double-sided Hydroxyl-containing polyimide (HPI)).

The laminate layer 141b is configured by laminating the HPI, which is a flame retardant material, on both sides, which makes it possible to delay a combustion phenomenon which is transferred to other adjacent battery cells 110 during ignition of the battery cell 110.

A joining material (not shown), which serves to join between the laminate layer 141b and the silicone layer 141c, may be included between the laminate layer 141b and the silicone layer 141c. By joining between the laminate layer 141b and the silicone layer 141c by the joining material, it is possible to secure the mechanical strength of the top cover 141.

In one specific embodiment of the present disclosure, the thickness of the laminate layer 141b may be 0.1 mm or more and 0.2 mm or less.

Such a thickness of the laminate layer 141b is intended to secure both heat resistance and flame retardancy. This thickness range may be suitable for effectively blocking heat or flames that may occur inside the battery assembly 100. Furthermore, the laminate layer 141b may can prevent weight increase and unnecessary manufacturing cost increase due to a thickness greater than necessary, while maintaining stable physical strength at the time of manufacture.

Specifically, when the thickness of the laminate layer is 0.1 mm or more and 0.2 mm or less, flame propagation can be delayed when thermal runaway occurs inside the battery assembly 100, and at the same time, additional mechanical stability can be secured, thereby further mitigating external force or thermal shock applied inside the battery assembly 100. That is, within this thickness range, the laminate layer 141b can exhibit uniform joining characteristics and heat resistance characteristics.

As a result, when the thickness of the laminate layer 141b is 0.1 mm or more and 0.2 mm or less, it is possible to effectively protect the inside of the battery assembly 100 and also maintain weight reduction. Even if heat or flame occurs inside the battery assembly 100, the laminate layer 141b exhibits flame retardant performance and can minimize thermal transfer to adjacent areas. In addition, it is possible to reduce the production cost by using a reasonable amount of materials during manufacturing, and also stably secure the required heat resistance, flame retardancy, mechanical strength, and the like. This makes it possible to increase the reliability and safety of the battery assembly 100.

In one specific embodiment of the present disclosure, the thickness of the silicone layer 141c may be 0.5 mm or more and 1.0 mm or less.

This thickness range may be suitable for stably securing flame retardancy and heat resistance. Even if heat generation or thermal runaway occurs, the silicone layer 141c can be protected so that physical deformation is not generated excessively. In addition, it is possible to reduce manufacturing costs by preventing unnecessary thickness increase.

Specifically, when the thickness of the silicone layer 141c is 0.5 mm or more and 1.0 mm or less, the silicone layer 141c can maintain stable physical strength even in external impact or explosive situations while reducing the risk of damage to the silicone layer 141c due to heat from a heat-generating area. This silicone layer 141c can further delay the process of heat diffusion, thereby reducing the thermal burden applied on adjacent areas.

As a result, the silicone layer 141c has a thickness of 0.5 mm or more and 1.0 mm or less, thereby making it easier to control heat and flame that may occur inside the battery assembly 100. Thus, it is possible to delay or prevent damage of internal components under the situation where thermal runaway occurs. In addition, a thickness of 0.5 mm or more is sufficient to maintain heat resistance and mechanical strength, and a thickness of 1.0 mm or less can suppress unnecessary material use and thus increase economic efficiency. This makes it possible to achieve internal stability and weight reduction in a balanced manner.

In one specific embodiment of the present disclosure, the laminate layer can be attached to an upper part or a lower part of the silicone layer.

Such an attachment structure can be advantageous in stably maintaining the interface between the laminate layer 141b and the silicone layer 141c under the situation where heat is propagated. In addition, the laminate layer 141b is located on the upper part or the lower part, so that the heat resistance and flame retardancy of the silicone layer 141c can be synergistically complemented.

When the laminate layer 141b is attached to the upper part of the silicone layer 141c, the physical impact or heat generated from the upper side can primarily mitigated by the laminate layer 141b. For example, even under the situation where heat is rapidly conducted, the silicone layer 141c can be protected from direct exposure. Meanwhile, when the laminate layer 141b is attached to the lower part of the silicone layer 141c, it is possible to secure the area abutting on the lower structure to thereby improve mechanical stability. In addition, the heat or impact emitted in the lower direction can be first mitigated by the laminate layer 141b, thereby reducing the possibility of damage to the silicone layer 141c.

By coupling the laminate layer 141b and the silicone layer 141c in this way, the battery assembly 100 can be expected to have a stable protection effect even in the event of thermal runaway. The laminate layer 141b is composed of a highly flame-retardant material and can serve to block thermal diffusion. The silicone layer 141c can provide excellent heat resistance characteristics and a certain level of mechanical cushioning. Therefore, by flexibly selecting the position where the laminate layer 141b and the silicone layer 141c are joined, the thermal stability and impact resistance of the battery assembly 100 can be secured together.

In one specific embodiment of the present disclosure, the top cover 141 can further include a film layer including a flame retardant material.

The flame retardant material may be, for example, MICA or glass fiber. Such a film layer can be suitable for delaying a thermal runaway or flame propagation situation while complementing the heat resistance and chemical resistance of the top cover 141. That is, the film layer can delay the damage of a part of the top cover 141 under the situation where heat rapidly increases or ignition occurs. Specifically, MICA included in the film layer may not be significantly deformed even when exposed to high temperatures, and may have excellent flame retardancy. On the other hand, a film layer including glass fiber can be advantageous in suppressing thermal diffusion while providing high mechanical tensile strength. These flame retardant materials can be uniformly attached even with a thin thickness in the process of joining to the top cover 141, so that the overall volume of the battery assembly 100 may not be significantly increased.

The film layer including the flame retardant material can improve the heat resistance and impact resistance of the top cover 141, and also delay the situation in which flames or harmful gases generated inside the battery assembly 100 rapidly propagate to adjacent areas. Furthermore, since the film layer can use a relatively light material, it is possible to minimize weight increase and maintain cost efficiency. Thereby, the safety and reliability of the battery assembly 100 can be secured at the same time.

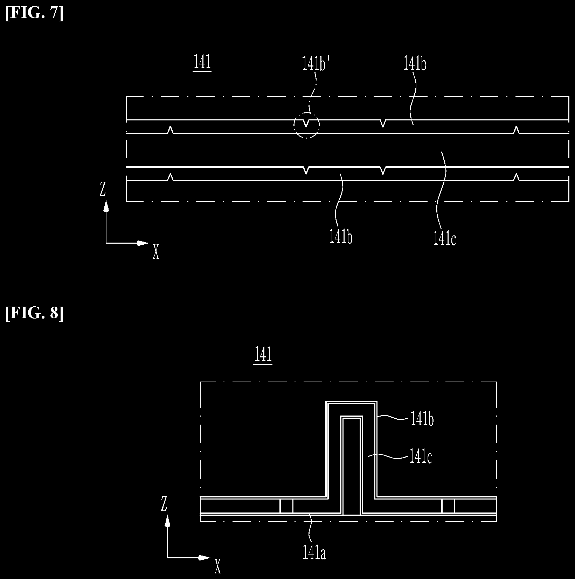

FIG. 7 is a cross-sectional view showing a cross section of a top cover according to one specific embodiment of the present disclosure. FIG. 8 is a cross-sectional view showing a cross section of a top cover taken along the cutting line A-A' of FIG. 4. Specifically, FIG. 7 is a cross-sectional view showing a cross section of a top cover before the partition walls are formed, and FIG. 8 is a cross-sectional view showing a cross section of a top cover after the partition walls are formed.

Referring to FIGS. 7 and 8, the laminate layer 141b may have a cut-opened part 141b' that is cut-opened to have a shape opened in the upper or lower direction (+Z-axis or -Z-axis direction of FIG. 7).

The top cover 141 can be initially manufactured in a flat state as shown in FIG. 7. The partition wall 141a can be manufactured at a later time in a bending or folding manner.

A worker or the like manufacturing the partition wall 141a can more easily bend or fold the laminate layer 141b through the cut-opened part 141b'. Therefore, it is possible to shorten the manufacturing time of the top cover 141, thereby reducing the manufacturing cost of the top cover 141.

The dimensions, such as the position and shape of the cut-opened part 141b', can be determined in various ways depending on the material properties of the top cover 141.

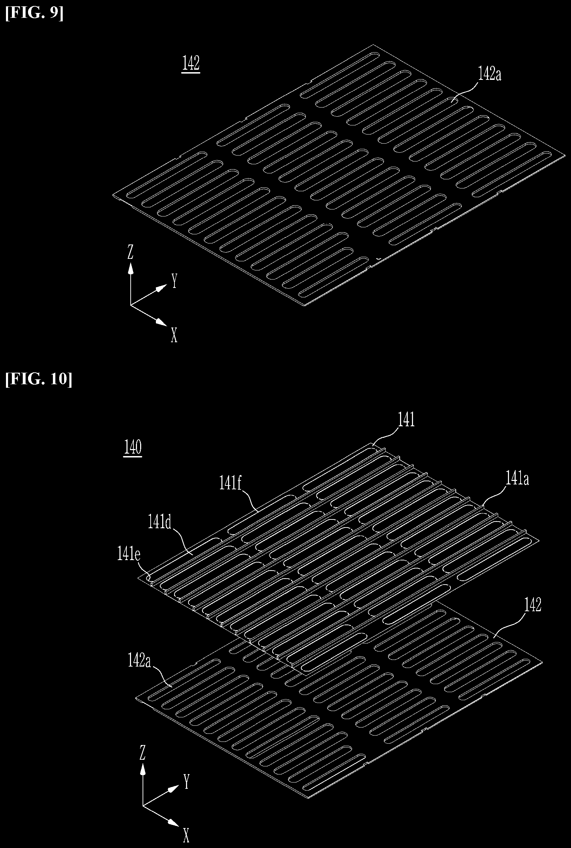

FIG. 9 is a perspective view showing a top plate 142 according to one specific embodiment of the present disclosure.

Referring to FIGS. 5, 6 and 9, the top cover assembly 140 may include a top plate 142 located at a lower end of the top cover 141.

The top plate 142 is a component for providing rigidity to the battery assembly 100 and may be made of a metal material, but the material of the top plate 142 is not necessarily limited thereto.

The top plate 142 may include a Polycarbonate (PC) film (not shown) having a hole through which can discharge flames or gases generated in the ignited battery cells 110.

The PC film is disposed at the lower end of the top plate 142, so that the PC film can serve to prevent the battery cell and the top plate 142 from directly abutting each other and causing a short circuit.

The PC film may include one or more partition walls. Due to the partition wall of the PC film, flame or gas generated in the ignited battery cells 110 can be prevented from being transferred to adjacent battery cells 110.

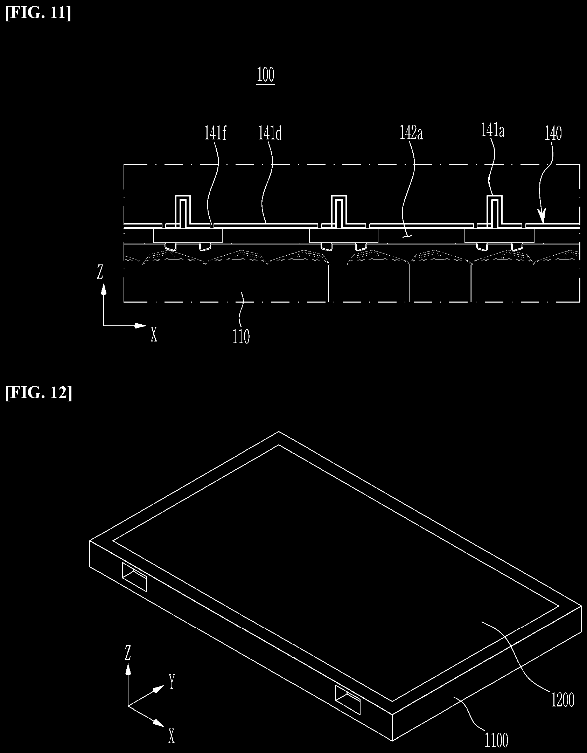

FIG. 10 is a perspective view showing a top cover 141 and a top plate 142 according to one specific embodiment of the present disclosure. FIG. 11 is a cross-sectional view of a battery assembly according to another embodiment of the present disclosure.

Referring to FIGS. 10 and 11, the top plate 142 may include at least one venting hole 142a for discharging gas in the frame 130.

Through the venting hole 142a, flames or gases generated in the ignited battery cells 110 may be smoothly discharged to the outside.

The number of venting holes 142a may be one or more, and may be determined in various ways in compliance with the capacity of the battery cell 110, the numerical value of the battery assembly 100, and the like. The shape of the venting hole 142a is not limited to the oval shape shown in the figure.

The top cover 141 may include a rupture part 141d that is located to correspond to the venting hole 142a and is structured to be ruptured at a predetermined pressure or higher. As an example, when the top cover assembly 140 is viewed from above along the height direction, the venting hole 142a and the rupture part 141d may correspond to each other on one-to-one basis. Here, viewing along the height direction may correspond to viewing along the -Z axis direction on the XY plane.

An opening part 141f may be formed in an area excluding the connecting part 141e among the circumferential edge of the rupture part 141d. The rupture part 141d may have a form that is connected to the top cover 141 by the connecting part 141e. In other words, by forming an opening part 141f corresponding to an area perforated in the top cover 141 excluding the connecting part 141e, a rupture part 141d having a structure that is ruptured at a predetermined pressure may be provided in the top cover 141. However, the shape of this rupture part 141d is one exemplary example in the present disclosure, and the shape is not particularly limited as long as the rupture part 141d in the present disclosure is closed in normal times, and then is ruptured at a predetermined pressure or higher to induce discharge of internal gas. The rupture part 141d described below is an exemplary structure that exhibits such a function.

An opening part 141f may be formed in an area excluding the connecting part 141e among the circumferential edge of the rupture part 141d, and the rupture part 141d may have a form that is connected to the top cover 141 by the connecting part 141e. At the upper end part of the top cover 141, the opening part 141f may be formed outside the venting hole 142a when viewed along a direction perpendicular to the upper end part of the top cover 141. Here, viewing along a direction perpendicular to the upper end part of the top cover 141 is the same as viewing along the height direction described above.

When a typical battery assembly 100 is used, the connecting part 141e is not ruptured. Since the opening part 141f is formed outside the venting hole 142a, the venting hole 142a is closed by the rupture part 141d in a normal operating state of the battery assembly 100. When a thermal runaway phenomenon of the battery cells 110 occurs and gas is generated inside the battery assembly 100, the connecting part 141e is ruptured and the venting hole 142a is exposed to the outside. That is, due to the rupture of the rupture part 141d and the connecting part 141e, gas inside the battery assembly 100 is discharged through the hole on the top cover 141 formed along the shape of the opening part 141f.

Therefore, the venting hole 142a can play the role of gas discharge only when gas is generated inside the battery assembly 100 due to thermal runaway of the battery cell 110 and the internal pressure rises above a predetermined reference value. This makes it possible to improve the stability of the battery assembly 100 and secure the perfect performance of the battery assembly 100 while preventing a situation in which the stability is reduced such as the internal configuration of the battery assembly 100 being exposed to the outside.

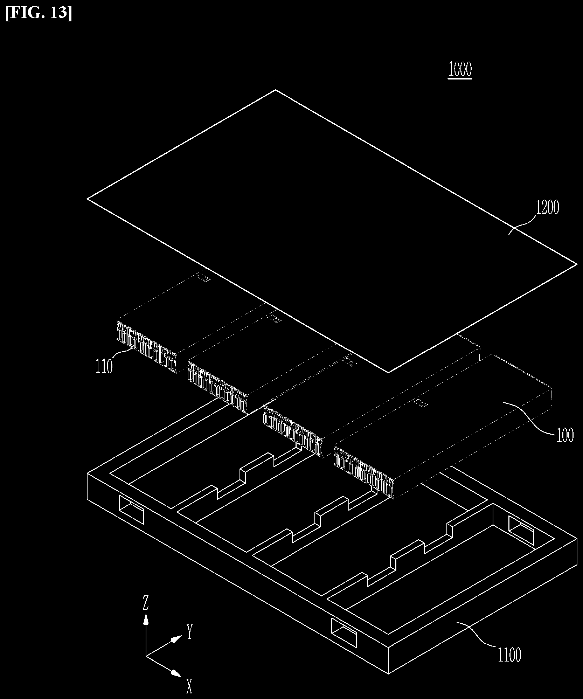

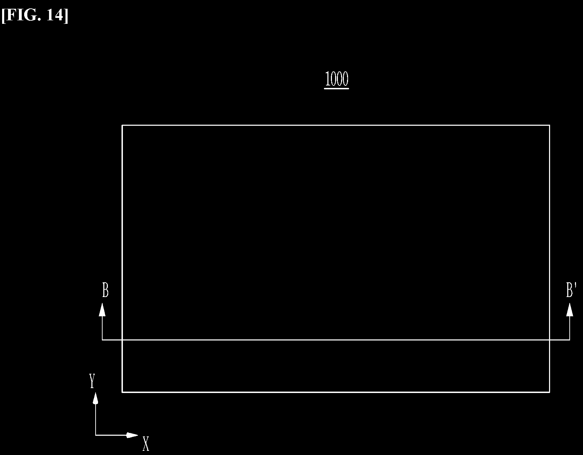

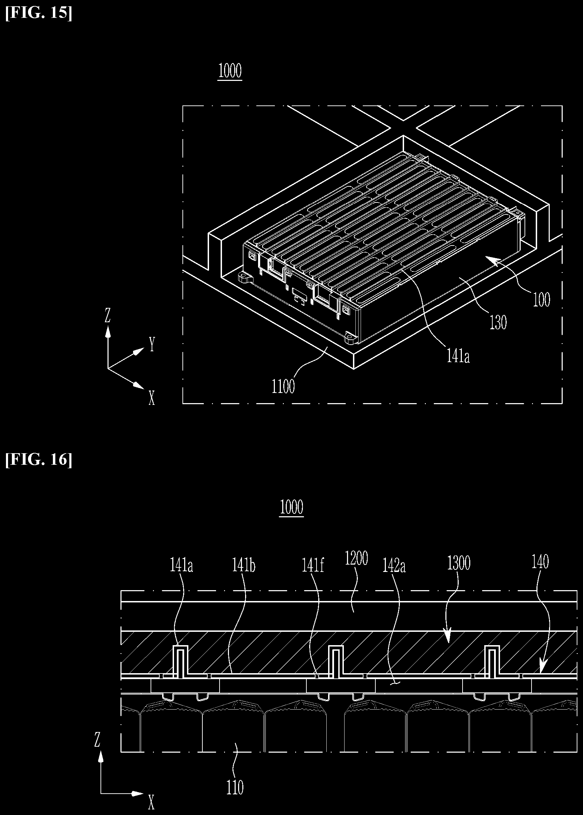

FIG. 12 is a perspective view of a battery pack according to one specific embodiment of the present disclosure. FIG. 13 is an exploded perspective view of a battery pack according to one specific embodiment of the present disclosure. FIG. 14 is a plan view of a battery pack according to one specific embodiment of the present disclosure. FIG. 15 is a partial perspective view showing a battery assembly housed in a battery pack according to one specific embodiment of the present disclosure. FIG. 16 is a cross-sectional view showing a cross-section taken along the cutting line B-B' of FIG. 14. Specifically, FIG. 15 is a partial perspective view showing a battery assembly 100 housed in a battery pack 1000 in which the pack cover 1200 is removed.

Referring to FIGS. 12 to 16, a battery pack 1000 according to one specific embodiment of the present disclosure includes a battery assembly 100, a pack frame 1100 in which the battery assembly 100 is housed and the upper part is open, and a pack cover 1200 that covers the open upper part of the pack frame 1100. A space partitioned by a partition wall 141a between the pack cover 1200 and the top cover 141 becomes a venting flow path 1300.

Since the venting flow path 1300 is partitioned by the partition wall 141a, it is possible to prevent flame or gas generated in the ignited battery cell 110 from moving to an adjacent venting flow path 1300. Therefore, the transfer of flame or gas to other adjacent battery cells 110 in the battery assembly 100 can be minimized. In this embodiment, the partition wall 141a can be spaced apart from the pack cover 1200 by a gap. Even if the partition wall 141a and the pack cover 1200 are spaced apart by a predetermined gap, it is difficult for flame or gas in one venting flow path 1300 to easily propagate to another venting flow path 1300 due to the presence of the partition wall 141a. Rather, , the configuration in which the venting flow paths 1300 communicate with each other at a predetermined interval in this manner may be advantageous in reducing the temperature of the flame or gas. Through the above configuration, it is possible to protect other adjacent battery cells 110 in the battery assembly 100 from flame or gas when the battery cell 110 ignites.

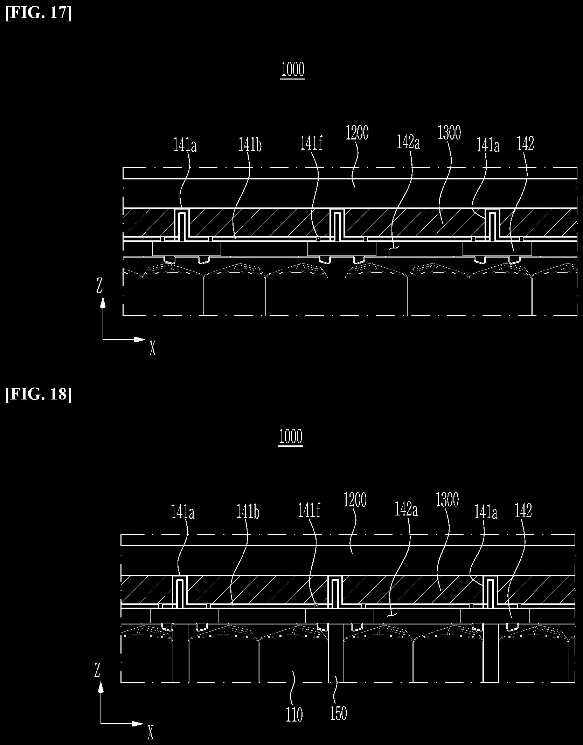

FIGS. 17 and 18 are cross-sectional views of a battery assembly and a battery pack according to yet another embodiment of the present disclosure.

Referring to FIG. 17, the partition wall 141a may be abutted on the lower end of the pack cover 1200. The plurality of venting flow paths 1300 partitioned by the partition walls 141a may not be communicated to each other. Therefore, the flame or gas may not be transferred to other adjacent battery cells 110 in the battery assembly 100. This makes it possible to protect other adjacent battery cells 110 in the battery assembly 100 from the flame or gas when the battery cell 110 ignites.

Referring to FIG. 18, a partition wall plate 150 may be disposed at least at one place among the battery cells 110. In the battery cell stack 120, at least one battery cell 110 may be partitioned on the basis of the partition wall plate 150 to form a battery cell 110 unit. The battery cell 110 unit and the venting flow path 1300 may correspond on one-to-one basis.

By disposing the partition wall plate 150 between the battery cells 110, the battery cells 110 between the partition wall plate 150 and the adjacent partition wall plate 150 can form one battery cell 110 unit. Due to the partition wall plate 150, the flame or gas generated in the ignited battery cell 110 can be prevented from moving to the adjacent battery cell 110 unit. Therefore, the flame or gas may not be transferred to other adjacent battery cells 110 in the battery assembly 100. This makes it possible to protect other adjacent battery cells 110 in the battery assembly 100 from the flame or gas when the battery cell 110 ignites.

Since the battery cell 110 units partitioned by the partition wall plate 150 can correspond one-to-one with the venting flow path 1300, the flame or gas generated in the ignited battery cell 110 can be doubly restricted from moving to other places by the partition wall plate 150 and the partition wall 141a. That is, the flame or gas generated in a certain battery cell 110 can be prevented from being transferred to other adjacent battery cells 110 in the battery assembly 100. Furthermore, the flame or gas generated in the battery cell 110 unit can be blocked from being transferred to other battery cell 110 units. This makes it possible to more reliably protect other adjacent battery cells 110 in the battery assembly 100 from the flame or gas when the battery cell 110 ignites.

The partition wall plate 150 may be formed of a composite material (e.g., sheet + silicone laminate). Specifically, the sheet may be a flame retardant material sheet and may serve to prevent the inflow of external flame, and the silicone laminate may serve to stably maintain the plate shape and reinforce its rigidity. In addition, the partition wall plate 150 may be formed in a rib structure. The thickness of the partition wall plate 150 may be set to a range of about 0.5 mm or more and 1.5 mm or less, and by having such a thickness range, heat resistance and mechanical stability can be secured. If necessary, an additional flame retardant coating may be applied to the partition wall plate 150.

As a result, through this configuration, the partition wall plate 150 may effectively prevent flame or gas from being transferred to an adjacent battery cell 110 when a battery cell 110 ignites.

The battery pack 1000 may be applied to various devices. Specifically, it can be applied to transportation vehicles such as an electric bike, an electric vehicle, and a hybrid electric vehicle, or an ESS (Energy Storage System) and may be applied to various devices capable of using secondary batteries, without being limited thereto.

The terms representing directions such as the front side, the rear side, the left side, the right side, the upper side, and the lower side have been used in the present embodiment, but the terms used are provided simply for convenience of description and may become different according to the position of an object, the position of an observer, or the like.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery assembly
130: frame
140: top cover assembly
141: top cover
141a: partition wall
142: top plate
1200: pack cover
1300: venting flow path

## Claims

1. A battery assembly comprising:
a battery cell stack in which a plurality of battery cells including electrode leads are stacked;
a frame in which the battery cell stack is housed and an upper surface is open; and
a top cover assembly that covers the open upper surface of the frame,
wherein the top cover assembly includes a top cover comprising partition walls.

2. The battery assembly according to claim 1,
wherein the top cover includes one or more laminate layers and silicone layers having flexibility.

3. The battery assembly according to claim 2,
wherein the laminate layer has a thickness of 0.1 mm or more and 0.2 mm or less.

4. The battery assembly according to claim 2,
wherein the silicone layer has a thickness of 0.5 mm or more and 1.0 mm or less.

5. The battery assembly according to claim 2,
wherein the laminate layer is attached to an upper part or a lower part of the silicone layer.

6. The battery assembly according to claim 2,
wherein the top cover further includes a film layer including a flame retardant material.

7. The battery assembly according to claim 2,
wherein the laminate layer has a cut-opened part that is cut-opened to have a shape opened upward or downward.

8. The battery assembly according to claim 1,
wherein the top cover assembly includes a top plate located at a lower end of the top cover.

9. The battery assembly according to claim 8,
wherein the top plate includes one or more venting holes for discharging gas in the frame.

10. The battery assembly according to claim 9,
wherein the top cover includes a rupture part that is located to correspond to the venting hole and is structured to be ruptured at a predetermined pressure or higher.

11. The battery assembly according to claim 10,
wherein an opening part is formed in an area excluding a connecting part among the circumferential edge of the rupture part, and the rupture part has a form that is connected to the top cover by the connecting part.

12. A battery pack comprising:
a battery assembly according to any one of claims 1;
a pack frame in which the battery assembly is housed and an upper part is open; and
a pack cover that covers the open upper part of the pack frame,
wherein a space partitioned by the partition wall between the pack cover and the top cover becomes a venting flow path.

13. The battery pack according to claim 12,
wherein the partition walls are spaced apart from the pack cover by a gap.

14. The battery pack according to claim 12,
wherein the partition walls are abutted on a lower end of the pack cover.

15. The battery pack according to claim 12,
wherein a partition wall plate is disposed at least at one place among the battery cells,
in the battery cell stack, one or more battery cells are partitioned on the basis of the partition wall plate to form a battery cell unit, and
the battery cell unit and the venting flow path correspond on one-to-one basis.
